# EUROPÄISCHE PATENTSCHRIFT

(11) **EP 0 617 078 B1**
(45) Veröffentlichungstag und Bekanntmachung des Hinweises auf die Patenterteilung: **25.02.1998**
(21) Anmeldenummer: 94104062.8
(22) Anmeldetag: 16.03.1994
(51) Int. Cl.: C08K 5/09, C08L 29/14

(54) **Weichmacherhaltige Polyvinylbutyrale mit gegenüber Silikatglas verbesserten haftungsreduzierenden Eigenschaften, Verfahren zu ihrer Herstellung und ihre Verwendung**
Plasticised polyvinyl butyrals with improved adhesion reducing properties vis-à-vis silica glass, their process of manufacture and their use
Polyvinylbutyrals plastifiées ayant des proprietés de réduction d'adhérence améliorées vis-à-vis de verre silicate, procédé de leur fabrication et utilisation

(30) Priorität: 25.03.1993 DE 4309638
(43) Veröffentlichungstag der Anmeldung: 28.09.1994
(73) Patentinhaber: Clariant GmbH, 65929 Frankfurt am Main (DE)
(72) Erfinder: Fischer, Hannes, Dr., D-65232 Taunusstein (DE)

(56) Entgegenhaltungen:
- EP-A- 0 010 718
- GB-A- 441 052
- US-A- 3 855 055

## Beschreibung

Gegenstand der Erfindung sind weichmacherhaltige Polyvinylbutyrale (PVB), die sich zur Herstellung von elastischen Zwischenlagenfolien mit verbesserten haftungsreduzierenden Eigenschaften für Verbundglasscheiben aus silikatischem Glas eignen und vorteilhaft zur Verbundglasherstellung verwendet werden können. Sie enthalten als haftungsreduzierende Zusätze wirksame Mengen von Salzen aus Metallen der Gruppen Ia, IIa, IIb, IIIa des Periodensystems der Elemente und natürlich vorkommenden Harzsäuren oder Derivaten von Harzsäuren sowie gegebenenfalls übliche Stabilisatoren und Hilfsmittel. Sie sind nach üblichen Methoden thermoplastisch formbar und eignen sich vorzugsweise zur Herstellung von plastifizierten PVB-Folien mit gegenüber silikatischen Glasscheiben vorteilhaft verbesserten haftungsreduzierenden Eigenschaften.

Als Zwischenlagenfolien für silikatische Verbundglasscheiben werden bekanntlich vorzugsweise plastifizierte weichmacherhaltige Polyvinylbutyralfolien (PVB-Folien) verwendet, deren Weichmachergehalt vorzugsweise 20 bis 60 Gew.-%, insbesondere 30 bis 45 Gew.-%, bezogen auf den Anteil an Polyvinylbutyral (PVB), beträgt. Die weichmacherhaltigen PVB-Folien enthalten ferner u.a. ca. 0,2 bis 0,8 Gew.-%, bezogen auf die plastifizierte Folienmasse, Wasser, wobei der Wassergehalt jeweils u.a. von den vorausgegangenen Lagerungsbedingungen der fertigen Folie abhängt.

Die wichtigste Aufgabe von Zwischenlagenfolien bzw. -schichten in silikatischen Verbundglasscheiben besteht darin, gegebenenfalls auf die Verbundglasscheiben einwirkende Aufprallenergien aufzunehmen und dadurch die Bruchfestigkeit der Scheiben zu verbessern. Dabei werden z.B. an Verbundsicherheitsglasscheiben, die als Fahrzeugscheiben im Automobilbau, als Schiffsglasscheiben, als Flugzeugscheiben, als Architekturglasscheiben für den Bausektor und als Panzerglasscheiben zum Einsatz kommen sollen, besonders hohe Anforderungen hinsichtlich der Bruchfestigkeit und der Splittersicherheit gestellt, damit aufprallende Gegenstände, wie z.B. Steine, die Scheiben möglichst nicht durchschlagen können und die Fahrzeuginsassen nicht durch Glassplitter verletzt werden können.

Es ist bekannt, daß das Optimum der Bruchfestigkeit von Verbundglasscheiben nicht mit dem Maximum der Haftungsfestigkeit der weichmacherhaltigen PVB-Folien auf silikatischem Glas zusammenfällt. Das Bruchfestigkeitsmaximum liegt statt dessen innerhalb eines begrenzten Bereichs mit verminderter Glashaftungsfestigkeit der weichmacherhaltigen PVB-Zwischenlagenfolien.

Um die günstigste Bruchfestigkeit von Glasverbunden zu erzielen, werden den plastifizierten PVB-Zwischenlagenfolien üblicherweise bestimmte Stoffe zugesetzt, die die Folienhaftung auf silikatischen Glasscheiben im erforderlichen Maß reduzieren. Der Zusatz von Haftungsregulatoren kann während oder nach der Herstellung der Folien erfolgen, im letzteren Fall z.B. durch Eintauchen der Folie in ein Bad, welches die Haftungsregulatoren gelöst enthält.

Als haftungsreduzierende Agentien, sog. Antihaftmittel, sind Hydroxide, carbonsaure Salze und Chelate von Metallen aus den Gruppen Ia, IIa und IIIa des Periodensystems der Elemente sowie auch von Zink und Blei bekannt.

Bekannte Antihaftmittel sind z.B. Formiate und Acetate von Kalium, Magnesium und Calcium, Alkaliphthalate, Magnesium-, Calcium- und Zinksalze der Neodecansäure und der 2-Ethylbuttersäure (vgl. z.B. DE-A 29 04 043 und EP-A 0 373 139) bzw. Cadmium-, Barium-, Zink- und Magnesiumsalze von Alkylnorbornancarbonsäuren (US-A 3 855 055).

Verbindungen der genannten Art können zwar in der Regel die Haftung zwischen silikatischen Glasscheiben und plastifizierten PVB-Verbundfolien herabsetzen, sie haben aber eine Reihe von Nachteilen, die ihren technischen Einsatz beeinträchtigen. So bewirken alkalisch reagierende Alkali- und/oder Erdalkalisalze von niederen Carbonsäuren häufig Farbvertiefungen des Folienmaterials während dessen Herstellung durch thermoplastische Formung und können außerdem zusammen mit dem in der Folienmasse vorhandenen Wasser zur Hydrolyse von Estergruppen in den Weichmachern führen. Darüber hinaus ist es generell schwierig, die Metallsalze der üblicherweise verwendeten Carbonsäuren, die in nur sehr geringen Konzentrationen eingesetzt werden, gleichmäßig in der plastifizierten PVB-Folienmasse zu verteilen, da sie im allgemeinen nicht oder nur wenig darin löslich sind. Ein wesentlicher Nachteil der im allgemeinen hydrophilen bekannten Haftungsregulatoren auf Metallcarboxylatbasis besteht auch darin, daß sie die Wasserempfindlichkeit von plastifizierten PVB-Verbundfolien erhöhen, was zu Trübungen und Haftungsverlust in den Glasverbunden führen kann.

Der vorliegenden Erfindung lag somit die Aufgabe zugrunde, weichmacherhaltige PVB-Folien zur Verwendung als Zwischenlagenfolien in silikatischen Verbundsicherheitsglasscheiben verfügbar zu machen, die zur Einstellung der optimalen Haftungsintensität gegenüber silikatischen Glasscheiben solche Zusatzstoffe als Haftungsregulatoren enthalten, die nicht zu den vorstehend erwähnten Nachteilen in den Folien führen.

Dieses Ziel kann gemäß vorliegender Erfindung erreicht werden, indem man als haftungsreduzierende Substanzen Salze von Metallen aus den Gruppen Ia, IIa, IIb oder IIIa des Periodensystems der Elemente mit Harzsäuren oder Derivaten von Harzsäuren einsetzt.

Gegenstand der Erfindung sind daher weichmacherhaltige Polyvinylbutyrale, die sich zur Herstellung von Zwischenlagenfolien für Verbundglasscheiben aus silikatischem Glas eignen und haftungsreduzierende Zusätze und gegebenenfalls übliche Stabilisatoren und Hilfsmittel enthalten, dadurch gekennzeichnet, daß sie als haftungsreduzierende Zusätze Salze von Metallen aus den Gruppen Ia, IIa, IIb, IIIa des Periodensystems der Elemente mit natürlich vorkommenden Harzsäuren oder Derivaten von Harzsäuren enthalten. Der Gehalt an Metallsalzen von Harzsäuren bzw. Harzsäurederivaten beträgt vorzugsweise 0,01 bis 0,2 Gew.-%, insbesondere 0,015 bis 0,1 Gew.-%, besonders bevorzugt 0,02 bis 0,06 Gew.-%, bezogen auf das plastifizierte weichmacherhaltige Polyvinylbutyral. Bevorzugt sind Gehalte von Metallsalzen aus der Gruppe der mehrwertigen Kationen, insbesondere Calcium-, Magnesium- oder Zinksalze von Harzsäuren oder Harzsäurederivaten. Besonders bevorzugt sind Gehalte von Metallsalzen des Kolophoniums.

Unter Harzsäuren sind natürlich vorkommende Harzsäuren bzw. Naturharze zu verstehen. Bei diesen handelt es sich im allgemeinen um Isomerengemische u.a. von Abietinsäure, wie sie in Baumharzen, z.B. in Kolophonium, in der Natur vorkommen. Als Bestandteile dieser Isomerengemische sind neben der Abietinsäure z.B. die Lävopimarsäure, Pimarsäure, Isopimarsäure, Palustrinsäure und Neoabietinsäure zu nennen. Die Harzsäuren können auch teilweise oder vollständig hydriert oder dimerisiert sein. Sie können ferner teilweise disproportioniert sein, wobei unter Disproportionierung die intermolekulare Verlagerung von ethylenischen Doppelbindungen zu verstehen ist. Vorzugsweise enthalten die Moleküle der den erfindungsgemäßen harzsauren Metallsalzen zugrundeliegenden Harzsäuren oder Harzsäurederivate mindestens 20 C-Atome.

Für die erfindungsgemäße Anwendung sind auch insbesondere Salze der vorstehend genannten Metalle mit Umsetzungsprodukten aus Harzsäuren und Aldehyden geeignet. Ihre Herstellung kann z.B. gemäß der DE-A 27 55 825 erfolgen. Dazu werden z.B. zunächst Harzsäuren unter erhöhtem Druck bei Temperaturen zwischen 100 und 200 °C mit vorzugsweise 0,1 bis 12 Gew.-%, bezogen auf die Harzsäuren, eines Aldehyds umgesetzt. Die Reaktion wird sodann durch Erhitzen des Reaktionsgemisches auf 200 bis 250 °C bei Normalunter Teilveresterung von Carboxyl- und Hydroxymethylgruppen bis zu einer Säurezahl (nach DIN 53402) von 115 bis 135 fortgesetzt. Das resultierende Umsetzungsprodukt wird sodann in das gewünschte Metallsalz überführt.

Für diese erfindungsgemäße Modifizierung der Harzsäuren werden als Aldehyde vorzugsweise aliphatische (C₁-C₇)-Aldehyde, Benzaldehyd, Furfural oder Glyoxal eingesetzt. Besonders bevorzugt wird Formaldehyd verwendet, der in monomerer, oligomerer oder polymerer Form eingesetzt werden kann.

Die erfindungsgemäß verwendeten Metallsalze von Harzsäuren und Harzsäurederivaten werden vorzugsweise durch Zugabe von z.B. Oxiden, Hydroxiden, Carbonaten oder Acetaten der erfindungsgemäß zu verwendenden Metalle, gegebenenfalls auch von Mischungen der genannten Metallverbindungen, zu den Harzsäuren bzw. Harzsäurederivaten bei Temperaturen von über 200 °C, vorzugsweise nicht höher als 260 °C, gebildet.

Daneben sind auch andere Verfahren zur Salzbildung, z.B. die Umsetzung alkalischer wäßriger Lösungen von Harzsäuren oder von Harzsäurederivaten mit Salzen mehrwertiger erfindungsgemäßer Metallionen, möglich.

Die in den, gegebenenfalls aus Naturharzen, chemisch umgewandelten Harzsäuren vorhandenen Carboxylgruppen werden erfindungsgemäß zu mindestens 50 Molprozent, vorzugsweise zu mehr als 60, insbesondere zu mehr als 80 und besonders bevorzugt bis zu 100 Molprozent, in die Salzform mit den erfindungsgemäßen Metallkationen überführt. Bei geringeren Umsetzungsgraden in die Salzform ist damit zu rechnen, daß ein Teil der Naturharzsäurekomponente nicht an der Salzbildung beteiligt wird und dadurch nicht die erfindungsgemäße haftungsreduzierende Wirkung enthalten kann. In der nichtneutralisierten freien Säureform vorliegende Harzsäuren bzw. Harzsäurederivate zeigen praktisch keine brauchbare haftungsreduzierende Wirkung.

Es ist auch möglich und kann in manchen Fällen vorteilhaft sein, in die erfindungsgemäßen Harzsäuremetallsalze zusätzlich ethylenisch ungesättigte Carbonsäuren oder Kondensationsprodukte von Phenolen und Aldehyden einzubauen. Dies kann vorzugsweise durch Zugabe der entsprechenden Komponenten zu der Naturharz- bzw. Naturharzsäureschmelze und Umsetzung der Reaktanden bei Temperaturen zwischen 100 und 280 °C, vorzugsweise zwischen 150 und 250 °C, erreicht werden. Die Zugabe kann wahlweise vor oder nach der Salzbildung der Naturharzsäuren erfolgen.

Die ethylenisch ungesättigten Carbonsäuren werden in Mengen von 0,1 bis maximal 3 Gew.-%, vorzugsweise von 0,2 bis 1 Gew.-%, und die Phenol-Aldehyd-Kondensationsprodukte in Mengen von 0,1 bis maximal 10 Gew.-%, vorzugsweise von 0,2 bis 3 Gew.-%, jeweils bezogen auf das Metallsalz der Naturharzsäuren, eingesetzt.

Als ethylenisch ungesättigte Carbonsäuren werden vorzugsweise (C₃-C₁₈)-Monocarbonsäuren oder -Dicarbonsäuren, insbesondere Fumarsäure, Malein-säure, Maleinsäureanhydrid, Itakonsäure, Acrylsäure, Methacrylsäure sowie Zimtsäure eingesetzt. Besonders bevorzugt sind Maleinsäureanhydrid und Acrylsäure.

Als Phenol-Aldehyd-Kondensationsprodukte können sowohl Produkte vom Novolak-Typ als auch vom Resoltyp eingesetzt werden. Zur Herstellung der Kondensationsprodukte werden als Phenolkomponenten vorzugsweise Phenol, (C₁-C₁₂)-Alkylphenole, vorzugsweise Kresol, Butyl-, Oktyl-, Nonylphenol, ferner Phenylphenol und Diphenylolpropan verwendet. Besonders bevorzugt wird Phenol verwendet. Als Aldehydkomponenten werden vorzugsweise aliphatische (C₁-C₇)-Aldehyde, Benzaldehyd, Furfural oder Glyoxal verwendet. Besonders bevorzugt wird Formaldehyd verwendet, der in monomerer, oligomerer oder polymerer Form eingesetzt werden kann.

Die haftungsvermindernde Wirkung der erfindungsgemäßen Salze von Harzsäuren bzw. Harzsäurederivaten in plastifizierten PVB-Folien ist gegenüber silikatischen Glasscheiben sehr stark ausgeprägt. Es sind daher Zusätze von vorzugsweise nur 0,01 bis 0,2 Gew.-%, insbesondere 0,015 bis 0,1 und besonders bevorzugt von 0,02 bis 0,06 Gew.-%, bezogen auf die gesamte plastifizierte weichmacherhaltige PVB-Folienmasse, erforderlich, um die Haftung von plastifizierten PVB-Zwischenlagenfolien auf silikatischen Glasscheiben auf einen zur Erzielung der höchstmöglichen Bruchfestigkeit von Glasscheibenverbunden optimalen Wert zu reduzieren.

Einen wesentlichen Vorteil besitzen die erfindungsgemäßen Metallsalze von Harzsäuren bzw. von Harzsäurederivaten gegenüber den meisten bekannten Haftungsregulatoren u.a. dadurch, daß sie sich infolge ihrer bereits in der Kälte sehr guten Löslichkeit in den üblichen PVB-Weichmachern leicht als Lösung in Weichmacher in die zu plastifizierenden PVB-Folienmassen einarbeiten und gleichmäßig verteilen lassen. Es ist aber auch möglich, die erfindungsgemäßen Haftungsregulatoren durch Eintauchen von extrudierten weichmacherhaltigen PVB-Folien, die gegebenenfalls übliche Stabilisatoren und Hilfsstoffe enthalten, in eine Lösung erfindungsgemäßer Metallsalze von Harzsäuren bzw. von Harzsäurederivaten in einem organischen Lösungsmittel auf die plastifizierten PVB-Folien aufzubringen und die Folien anschließend zu trocknen. Als organische Lösungsmittel eignen sich hierbei vorzugsweise z.B. Aromaten, insbesondere Toluol oder Xylol, ferner Ester, vorzugsweise z.B. Butylacetat, sowie Äther, vorzugsweise z.B. Diethylenglykoldimethyläther. Beide genannten Applikationsmethoden stellen bevorzugte Varianten des Zusatzes erfindungsgemäßer Haftungsregulatoren zu den weichmacherhaltigen PVB-Formmassen dar.

Überraschend ist ferner, daß trotz der Eigenfarbe von Abietinsäure und Abietinsäurederivaten die Verwendung von daraus hergestellten erfindungsgemäßen Metallsalzen als Haftungsregulatoren in plastifizierten, weichmacherhaltigen PVB-Folien keine Gelb- oder Braunfärbungen in den letzteren verursacht, sondern statt dessen zu völlig farblosen Folien von überraschend vorteilhafter optischer Qualität führt, wobei diese Folien außerdem eine verbesserte Farbtonstabilität bei Einwirkung von hohen Temperaturen und/oder starker Scherbeanspruchung, wie sie während der thermoplastischen Herstellung- und Verarbeitungsprozesse auftreten können, besitzen.

Ein weiterer Vorteil erfindungsgemäßer Metallsalze von Harzsäuren bzw. von Harzsäurederivaten besteht bei ihrer Verwendung als Haftungsregulatoren in plastifizierten weichmacherhaltigen PVB-Zwischenlagenfolien für silikatische Verbundglasscheiben darin, daß sie, im Gegensatz zu vielen bekannterweise als Haftungsregulatoren eingesetzten Salzen niederer Carbonsäuren oder Dicarbonsäuren, die Empfindlichkeit der plastifizierten weichmacherhaltigen PVB-Folien gegen Wasserdampf nicht erhöhen. Die Wasserdampfempfindlichkeit von Verbundglaszwischenlagenfolien macht sich gegebenenfalls von den Außenrändern der Verbundglasscheiben nach innen durch fortschreitende Trübung des Folienrandes in der Verbundglasscheibe in stark wasserdampfhaltiger Atmosphäre bei erhöhter Temperatur und längeren Expositionszeiten bemerkbar. Es ist daher ein wichtiges Erfordernis, die Wasserdampfanfälligkeit der Glasverbunde so gering wie möglich zu halten.

Als Weichmacher in den erfindungsgemäßen weichmacherhaltigen Polyvinylbutyralen können alle mit PVB oder mit Polyvinylacetalen verträglichen und für deren Plastifizierung geeigneten bekannten Weichmacher oder Weichmachergemische verwendet werden. Eine Aufstellung von handelsüblichen Weichmachern, die Angaben über deren Verträglichkeit mit PVB enthält, kann z.B. der Druckschrift Modern Plastics Encyclopedia 1981/1982, Seiten 710 bis 719, entnommen werden. Bevorzugte Weichmacher sind z.B. Diester von aliphatischen Diolen, insbesondere von aliphatischen Polyätherdiolen bzw. Polyätherpolyolen, mit aliphatischen Carbonsäuren, vorzugsweise Diester von Polyalkylenoxiden, insbesondere Diester des Di-, Tri- und Tetraethylenglykols mit aliphatischen (C₆-C₁₀)-Carbonsäuren, vorzugsweise 2-Ethylbuttersäure und n-Heptansäure, ferner Diester von aliphatischen oder aromatischen (C₂-C₁₈)-Dicarbonsäuren, vorzugsweise Adipin-, Sebazin- und Phthalsäure, mit aliphatischen (C₄-C₁₂)-Alkoholen, vorzugsweise Dihexyladipat.

Die Weichmacher werden zur Plastifizierung von PVB in üblichen Mengen eingesetzt, die vorzugsweise im Bereich von 20 bis 60 Gew.-%, insbesondere 30 bis 45 Gew.-%, bezogen auf das PVB, liegen.

Anstelle der durch Beimischung von niedermolekularen äußeren Weichmachern plastifizierten Polyvinylbutyrale können auch innerlich weichgemachte Polyvinylbutyrale, deren Schmelztemperatur unterhalb ihrer Zersetzungstemperatur liegt, gegebenenfalls ohne die Mitverwendung niedermolekularer äußerer Weichmacher erfindungsgemäß haftungsreduzierend modifiziert und thermoplastisch verarbeitet werden.

Die erfindungsgemäßen haftungsreduzierenden Zusätze, Weichmacher und gegebenenfalls übliche Stabilisatoren und Hilfsmittel enthaltenden plastifizierten Polyvinylbutyrale werden vorzugsweise mittels thermoplastischer Extrusion durch Breitschlitzdüsen zu vorzugsweise 0,2 bis 2 mm dicken und als Verbundglaszwischenlagenfolien geeigneten Flachfolien extrudiert. Die Extrusionstemperatur der Extrusionsformmassen liegt im üblichen Bereich, vorzugsweise zwischen 140 und 250 °C, wobei kurzfristig auch höhere Temperaturen erreicht werden können. Die Herstellung von Flachfolien kann auch durch thermoplastische Verformung der erfindungsgemäß haftungsreduzierend modifizierten und plastifizierten PVB-Formmassen auf einem beheizbaren Dreiwalzenstuhl bzw. einem Kalander erfolgen.

Die Extrusionsformmassen können als übliche Zusätze u.a. geringe Mengen an Alkali, vorzugsweise z.B. 0,001 bis 0,1 Gew.-%, bezogen auf PVB, Alkalihydroxid oder alkalisch reagierendes Alkalisalz zur Stabilisierung des PVB-s gegen saure Hydrolyse enthalten. Dieser Alkaligehalt wird üblicherweise auch als Alkalititer des PVB-s bezeichnet. Als weitere Stabilisatoren können sie ferner Lichtstabilisatoren, insbesondere UV-Lichtstabilisatoren, sowie Antioxidantien enthalten.

Bei der Folienextrusion von plastifizierten Polyvinylbutyralen ist es gegebenenfalls besonders wichtig, bei möglichst hohen Massetemperaturen extrudieren zu können, um dadurch die Schmelzviskosität der plastifizierten Extrusionsmasse möglichst stark absenken bzw. möglichst niedrig halten und möglichst hohe Extruderdurchsätze pro Zeiteinheit erzielen zu können, ohne die Extrusionsmasse oxidativ und/oder thermisch zu schädigen und Vergilbungen zu riskieren. Durch die Verwendung von erfindungsgemäß haftungsreduzierend modifizierten weichmacherhaltigen PVB-en können auch diese Forderungen weitgehend erfüllt werden.

Die erfindungsgemäß verwendeten Polyvinylbutyrale, können nach literaturbekannten Methoden durch Acetalisierung von Polyvinylalkohlen (PVAL) mit Aldehyden oder niedermolekularen Aldehydacetalen unter Säurekatalyse und üblichen Acetalisierungsbedingungen vorzugsweise in wäßrigem oder nichtwäßrigem Medium, insbesondere in wäßrigem Medium, hergestellt werden. Die Ausgangspolyvinylalkohole, aus denen die Polyvinylbutyrale hergestellt werden, haben vorzugsweise Molekulargewichte von 2000 bis 250000, insbesondere von 10000 bis 150000, und können teil- oder vollverseift sein. Besonders bevorzugt sind die vollverseiften PVAL-Typen, wobei als vollverseifte PVAL-e solche zu verstehen sind, bei denen mindestens 95 Mol-%, vorzugweise 98 bis 100 Mol-%, der ursprünglich in dem dem PVAL zugrunde liegenden Ausgangspolyvinylester vorhandenen Vinylestereinheiten zu Vinylalkoholeinheiten verseift sind.

Die erfindungsgemäß verwendeten Polyvinylbutyrale können neben Acetalgruppen, die sich von Butyraldehyden ableiten, noch untergeordnete Mengen, vorzugsweise weniger als 5 Mol-%, bezogen auf die Gesamtmenge an Acetalgruppen, anderer Acetalgruppen enthalten, die sich von aliphatischen, cycloaliphatischen oder aromatischen Aldehyden ableiten, z.B. von Formaldehyd, Acetaldehyd, Propionaldehyd, Isononanaldehyd oder Benzaldehyd. Bevorzugt sind Polyvinylbutyrale, die sich weitgehend nur von Butyraldehyden ableiten, insbesondere von n-Butyraldehyd.

Insgesamt soll die Acetalisierung des PVAL-s vorzugsweise nicht mehr als 85 Mol-%, insbesondere 80 bis 30 Mol-%, besonders bevorzugt 75 bis 45 Mol-%, der ursprünglich in dem Ausgangs-PVAL vorhandenen Vinylalkoholeinheiten (= 100 Mol-%) erfassen. Erfindungsgemäß verwendete Polyvinylbutyrale enthalten daher vorzugsweise 15 bis 50 Gew.-%, insbesondere 18 bis 23 Gew.-%, bezogen auf das PVB, nicht acetalisierte Vinylalkoholeinheiten. Die Vermischung der PVB-e mit Weichmachern und den übrigen erfindungsgemäß zu verwendenden Komponenten und Zusatzstoffen unter Plastifizierung der Mischung und deren thermoplastische Formung, vorzugsweise zu Folien, kann, wie bereits vorstehend beschrieben, vorzugsweise in einem Extruder oder auch in einem Mischer und einem beheizbaren Dreiwalzenstuhl oder Kalander erfolgen.

Zur Prüfung der Folien hinsichtlich ihrer Verwendbarkeit als Zwischenlagenfolien in silikatischen Verbundglasscheiben werden aus erfindungsgemäßen weichmacherhaltigen Polyvinylbutyralen nach dem Extrusionsverfahren Flachfolien von 0,8 mm Dicke hergestellt und diese als Zwischenlagenfolien in Verbundglasscheiben für die Herstellung von Verbundglasprüfkörpern verwendet. Dazu werden jeweils aus zwei mit salzfreiem Wasser gewaschenen Glasplatten aus Floatglas (Panilux®-Glas) des Formats 30 x 30 x 0,2 cm und der zu prüfenden plastifizierten PVB-Folie als Zwischenlagenschicht Glasverbunde, in denen jeweils eine Zinn- und eine Feuerseite des Glases der Folie zugewandt sind, hergestellt und zunächst bei 60 bis 100 °C, vorzugsweise 80 °C, und geringem Pressdruck, vorzugsweise 3 bar, zu einem Vorverbund und anschließend bei 120 bis 160 °C vorzugsweise 140 °C, und 8 bis 16 bar, vorzugweise 12 bar, während einer Presszeit von 10 bis 120 Minuten, vorzugsweise 60 Minuten, zum fertigen Glasverbund verpreßt.

Bei den in den nachfolgenden Beispielen beschriebenen Prüfungen werden zur Beurteilung der Bruchfestigkeit bzw. Durchschlagfestigkeit der Verbundglasscheiben, der Wasserdampfempfindlichkeit der Glasverbundzwischenlagenfolien sowie des Folienfarbtons folgende Prüfmethoden angewandt.

Die Durchschlagfestigkeit wird nach ANSI 26.1-1983, Ziff. 5.26, Test 26 geprüft. Eine auf 23 °C temperierte Verbundglasscheibe von 30 x 30 cm wird horizontal in einen Rahmen eingelegt. Eine Stahlkugel von 2,26 kg wird frei auf die Mitte dieser Scheibe fallengelassen. Es wird die Fallhöhe ermittelt, bei der in mehrmaliger Wiederholung die Glasplatte nicht mehr durchschlagen wird. Diese Enffernung wird als Kugelfallhöhe angegeben.

Von technisch brauchbaren Glasverbunden muß eine Fallhöhe von mindestens 5,5 m erreicht werden, unabhängig davon, auf welche Seite des Glasverbundes die Kugel geworfen wird. Es is dabei zu beachten, daß die üblicherweise verwendeten Floatglasscheiben unterschiedliche Oberflächen haben: Eine Feuerseite, die während der Herstellung den Heizbrennern zugewandt war, und eine Zinnseite, die auf dem flüssigen Zinnbad auflag. Hinsichtlich der Glashaftung von Sicherheitsfolien und damit auch bezüglich der Bruch- bzw. Durchschlagfestigkeit haben diese Oberflächen unterschiedliche Eigenschaften.

Weiterhin wird zur Bestimmung der Haftungsfestigkeit zwischen der plastifizierten Verbundfolie und der Glasoberfläche der sogenannte Pummel-Test durchgeführt, wie er in der GB-A 1 093 864 und in der SAE (Society of Automotive Engineers)Methode 1208 beschrieben ist. Er dient zur Beurteilung der Haftung zwischen Glas und der plastifizierten weichmacherhaltigen PVB-Folie nach Zerbrechen der Verbundglasscheibe bei tiefen Temperaturen. Bei dieser Prüfung wird die Oberfläche der auf -18 °C gekühlten Verbundglasscheibe durch Schläge mit einem speziellen Hammer zertrümmert. Die Haftungsfestigkeit wird nach dem Flächenanteil der Zwischenlagenfolie, der mit haftengebliebenen Glassplittern belegt ist, beurteilt und in Zahlenwerten von 0 bis 10 angegeben (0 = keine Haftung, 10 = vollständige Haftung). Optimale Bruchfestigkeit von Verbundglasscheiben wird in der Regel erzielt, wenn der Pummelwert zwischen 2 und 6, vorzugsweise zwischen 3 und 5, liegt.

Zur Charakterisierung der Eigenfarbe der Folien (Gelb- bis Braunfärbung) werden nach ASTM-D-1925 mit einem Spektralmeßgerät (Labscan® 5100) der sogenannte Yellowness-Index Yl und die Blau-Gelb-Verschiebung b gemessen. Es werden die Differenzen dieser Werte gegenüber Messungen an den folienfreien Glasscheiben als Δ YI und Δ b angegeben, wobei kleine Zahlenwerte Farblosigkeit bis hellgelbe Farbtöne bedeuten.

Die Farbtonstabilität von Glasverbundfolien bei Einwirkung von hohen Temperaturen und/oder starker Scherbeanspruchung wird dadurch bestimmt, daß 50 g der weichmacherhaltigen PVB-Folienmasse 15 Minuten bei 150 °C in einem mit 50 Umdrehungen/Minute laufenden Knetapparat (Modell Brabender W50EC) geknetet werden. Anschließend wird die Farbe einer zu einem Strang geformten Probe in einem Hellige®-Farbmeßgerät im Vergleich zu einer Farbskala gemessen, die Werte von 1 (farblos) bis 18 (braun) anzeigt. Demzufolge neigen Folien umso weniger zu Verfärbungen, je niedriger die ermittelte Kneterfarbzahl ist.

Die Randtrübung von Glasverbundfolien wird nach ANSI 26.1-1977, Ziff. 5.3, Test 3 bewertet, wobei gemessen wird, in welcher Breite (in Millimetern) sich gegebenenfalls ein getrübter Randstreifen in das Innere einer Verbundscheibe erstreckt, die 14 Tage bei 50 °C in gesättigter Wasserdampfatmosphäre gelagert wurde.

Die Erfindung wird durch die nachfolgenden Beispiele näher erläutert.

### Beispiele 1 bis 8

In den Beispielen 1 bis 8 werden jeweils 100 Gewichtsteile (GT) handelsübliches, für die Herstellung von Verbundglasfolien geeignetes Polyvinylbutyral (®Mowital B 62 SF, Hersteller: Fa. Hoechst AG) mit jeweils 33 GT des Weichmachers Adipinsäure-di-n-hexylester, in dem die Gesamtmenge des in der nachstehenden Tabelle I, Spalten 2 und 3, jeweils aufgeführten erfindungsgemäßen haftungsreduzierenden Zusatzstoffes gelöst ist, vermischt, nach erfolgtem Aufsaugen des Weichmachers durch das PVB in einem Leistritz-Zweischneckenextruder bei 180 °C homogenisiert und durch eine Schlitzdüse zu jeweils einer 0,8 mm dicken Flachfolie extrudiert.

Die Herstellung von Glasverbund-Prüfkörpern mit den erhaltenen Flachfolien als Zwischenlagenfolie und jeweils zwei Floatglasscheiben der Abmessung 30 x 30 x 0,2 cm erfolgt wie in der vorstehenden Beschreibung bereits beschrieben. An solchermaßen hergestellten Verbundglasprüfkörpern bzw. an Abschnitten davon werden die Durchschlagfestigkeit (Kugelfallhöhe), die Bruchfestigkeit (Pummelwert) und die Randtrübung (Breite in mm) gemessen.

Die Farbtonwerte Δ YI und Δ b werden an speziell für diese Messungen hergestellten Glasverbund-Prüfkörpern ermittelt, während die Farbtonstabilität unmittelbar an der plastifizierten weichmacherhaltigen PVB-Folienmasse im Kneterversuch, wie in der vorstehenden Beschreibung bereits beschrieben, ermittelt und als Kneterfarbzahl angegeben wird. Die Ergebnisse der Beispiele 1 bis 8 sind in der nachstehenden Tabelle 1 zusammengefaßt wiedergegeben, wobei in den Spalten 2 und 3 der Tabelle 1 Art und Konzentration des jeweils verwendeten erfindungsgemäßen haftungsreduzierenden Zusatzstoffes aufgeführt sind.

### Vergleichsbeispiele 1 und 2

In analoger Weise wie in den Beispielen 1 bis 8 beschrieben werden durch Extrusion und thermoplastische Formung plastifizierte weichmacherhaltige PVB-Flachfolien von 0,8 mm Dicke vergleichsweise mit der Abänderung hergestellt, daß anstelle der erfindungsgemäßen haftungsreduzierenden Zusatzstoffe nun im Vergleichsbeispiel 1 als nichterfindungsgemäßer bekannter haftungsreduzierender Standard-Zusatzstoff Kaliumacetat und im Vergleichsbeispiel 2 unbehandeltes Kolophonium in seiner naturharzsauren, nichtneutralisierten Form zugesetzt werden. Die bei der Folienherstellung jeweils verwendeten Zusatzmengen und die Ergebnisse der Messungen an den mit dem Folienmaterial hergestellten Prüfkörpern sind ebenfalls in der Tabelle 1 zusammengefaßt wiedergegeben.

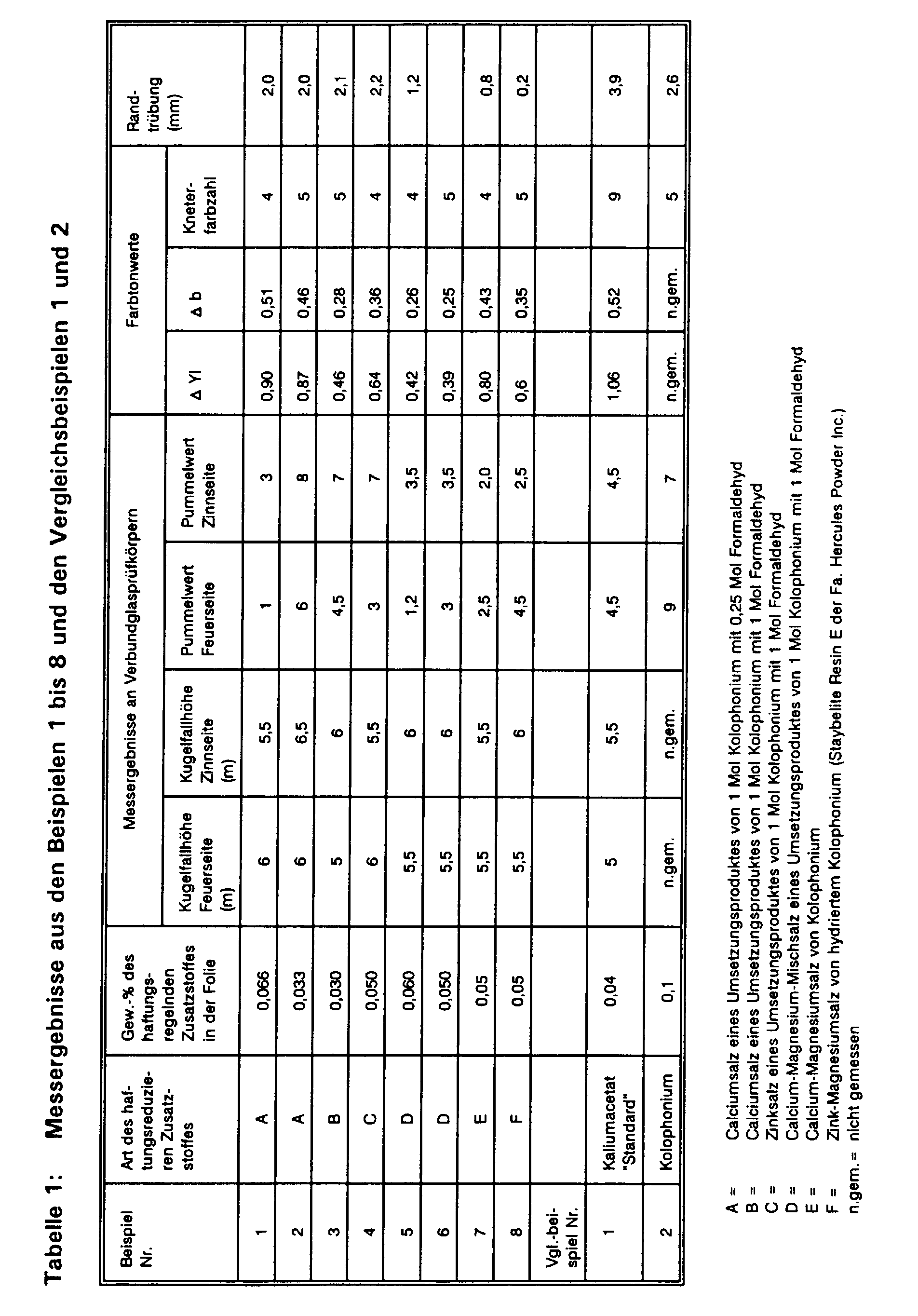

Wie in der Tabelle 1 die Ergebnisse der Beispiele 1 bis 8 zeigen, resultieren mit den erfindungsgemäßen haftungsregulierenden Zusatztoffen bei den Verbundglasfolien insgesamt deutlich bessere Eigenschaftswerte, insbesondere beim Pummel-Test, bei den Farbtonwerten und bei der Randtrübung, vergleichsweise zu den entsprechenden Standard-Werten des Vergleichsbeispiels 1 sowie den Werten mit metallsalzgruppenfreiem Kolophonium des Vergleichsbeispiels 2.

## Patentansprüche

1. Weichmacherhaltige Polyvinylbutyrale, die sich zur Herstellung von Zwischenlagenfolien für Verbundglasscheiben aus silikatischem Glas eignen und haftungsreduzierende Zusätze und gegebenenfalls übliche Stabilisatoren und Hilfsmittel enthalten, dadurch gekennzeichnet, daß sie als haftungsreduzierende Zusätze Salze von Metallen aus den Gruppen Ia, IIa, IIb, IIIa des Periodensystems der Elemente mit natürlich vorkommenden Harzsäuren oder Derivaten von Harzsäuren enthalten.

2. Weichmacherhaltige Polyvinylbutyrale nach Anspruch 1, dadurch gekennzeichnet, daß der Weichmachergehalt 20 bis 60 Gew.-%, vorzugsweise 30 bis 45 Gew.-%, bezogen auf das PVB, beträgt.

3. Weichmacherhaltige Polyvinylbutyrale nach Anspruch 1 oder 2, dadurch gekennzeichnet, daß der Gehalt an Metallsalzen von Harzsäuren bzw. Harzsäurederivaten 0,01 bis 0,2 Gew.-%, vorzugsweise 0,015 bis 0,1 Gew.-%, insbesondere 0,02 bis 0,06 Gew.-%, bezogen auf das weichmacherhaltige Polyvinylbutyral, beträgt.

4. Weichmacherhaltige Polyvinylbutyrale nach einem oder mehreren der Ansprüche 1 bis 3, dadurch gekennzeichnet, daß sie Metallsalze aus der Gruppe Calcium-, Magnesium- oder Zinksalze von Harzsäuren oder Harzsäurederivaten enthalten.

5. Weichmacherhaltige Polyvinylbutyrale nach einem oder mehreren der Ansprüche 1 bis 4, dadurch gekennzeichnet, daß sie Metallsalze von Kolophonium oder Kolophoniumderivaten enthalten.

6. Weichmacherhaltige Polyvinylbutyrale nach einem oder mehreren der Ansprüche 1 bis 4, dadurch gekennzeichnet, daß sie Metallsalze von Umsetzungsprodukten aus Harzsäuren mit 0,1 bis 12 Gew.-%, bezogen auf die Harzsäuren, eines aliphatischen (C₁-C₇)-Aldehyds, Benzaldehyd, Furfural oder Glyoxal, monomerem, oligomerem oder polymerem Formaldehyd, enthalten.

7. Weichmacherhaltige Polyvinylbutyrale nach einem oder mehreren der Ansprüche 1 bis 4, dadurch gekennzeichnet, daß sie Metallsalze von Umsetzungsprodukten aus Harzsäuren oder aus harzsauren Metallsalzen mit 0,1 bis 3 Gew.-%, bezogen auf die Metallsalze der Harzsäuren, einer ethylenisch ungesättigten (C₃ bis C₁₈)-Carbonsäure oder -Dicarbonsäure oder eines -Dicarbonsäureanhydrids enthalten.

8. Weichmacherhaltige Poylvinylbutyrale nach einem oder mehreren der Ansprüche 1 bis 4, dadurch gekennzeichnet, daß sie Metallsalze von Umsetzungsprodukten aus Harzsäuren oder aus harzsauren Metallsalzen mit 0,1 bis 10 Gew.-%, bezogen auf die Metallsalze der Harzsäuren, eines Phenol-Aldehyd-Kondensationsproduktes vom Novolak- oder Resoltyp enthalten.

9. Verwendung der weichmacherhaltigen Polyvinylbutyrale nach einem oder mehreren der Ansprüche 1 bis 8 in plastifizierten Folien.

10. Plastifizierte Folien mit einer Dicke von 0,2 bis 2 mm aus weichmacherhaltigen Polyvinylbutyralen nach einem oder mehreren der Ansprüche 1 bis 8.

11. Verwendung der weichmacherhaltigen Polyvinylbutyralfolien nach Anspruch 10 als Zwischenlagenfolien in silikatischen Verbundsicherheitsglasscheiben bzw. Glasverbundscheiben.

12. Verfahren zur Herstellung von weichmacherhaltigen Polyvinylbutyralen mit reduziertem Haftvermögen an silikatischen Glasflächen nach einem oder mehreren der Ansprüche 1 bis 8, dadurch gekennzeichnet, daß den Gemischen aus Polyvinylbutyralen und Weichmachern haftungsreduzierende Zusätze aus der Gruppe der Salze von Metallen aus den Gruppen Ia, IIa, Iib, IIIa des Periodensystems der Elemente mit natürlich vorkommenden Harzsäuren oder Harzsäurederivaten, gegebenenfalls zusammen mit üblichen Stabilisatoren und Hilfsmitteln, vor oder während oder nach der Vermischung des Polyvinylbutyrals mit den Weichmacher zugesetzt und homogen verteilt und gelöst werden, gegebenenfalls unter gleichzeitiger thermoplastischer Formung der weichmacherhaltigen und plastifizierten Polyvinylbutyrale zu Folien.

13. Verfahren zur Herstellung von weichmacherhaltigen Polyvinylbutyralen mit reduziertem Haftungsvermögen an silikatischen Glasflächen nach einem oder mehreren der Ansprüche 1 bis 8, dadurch gekennzeichnet, daß man auf weichmacherhaltige, plastifizierte PVB-Folien, die gegebenenfalls übliche Stabilisatoren und Hilfsstoffe enthalten, haftungsreduzierende Zusätze aus der Gruppe der Salze von Metallen aus den Gruppen Ia, IIa, IIb, IIIa des Periodensystems der Elemente mit natürlich vorkommenden Harzsäuren oder Harzsäurederivaten aufträgt, indem man die Folien in Lösungen, die eine ausreichende Menge dieser Metallsalze in einem organischen Lösungsmittel gelöst enthalten, eintaucht und anschließend trocknet.

14. Verbundgläser aus silikatischen Glasscheiben mit Zwischenlagenfolien aus plastifiziertem weichmacherhaltigem PVB, dadurch gekennzeichnet, daß die Zwischenlagenfolien aus plastifiziertem haftungsreduziertem weichmacherhaltigem PVB nach einem oder mehreren der Ansprüche 1 bis 8 bestehen.

15. Verwendung der Verbundgläser nach Anspruch 14 in Fahrzeugscheiben, Schiffsglasscheiben, Flugzeugscheiben, Architekturglasscheiben für den Bausektor und Panzerglasscheiben.

## Claims

1. A plasticizer-containing polyvinylbutyral which is suitable for the production of interleaving films for laminated glass panes of siliceous glass and comprises adhesion-reducing additives and, if appropriate, customary stabilizers and auxiliaries, which polyvinylbutyral comprises, as adhesion-reducing additives, salts of metals from groups Ia, IIa, IIb and IIIa of the periodic table of the elements with naturally occurring resin acids or derivatives of resin acids.

2. A plasticizer-containing polyvinylbutyral as claimed in claim 1, wherein the plasticizer content is 20 to 60% by weight, preferably 30 to 45% by weight, based on the PVB.

3. A plasticizer-containing polyvinylbutyral as claimed in claim 1 or 2, wherein the content of metal salts of resin acids or resin acid derivatives is 0.01 to 0.2% by weight, preferably 0.015 to 0.1% by weight, in particular 0.02 to 0.06% by weight, based on the plasticizer-containing polyvinylbutyral.

4. A plasticizer-containing polyvinylbutyral as claimed in one or more of claims 1 to 3, which comprises metal salts from the group consisting of calcium salts, magnesium salts and zinc salts of resin acids or resin acid derivatives.

5. A plasticizer-containing polyvinylbutyral as claimed in one or more of claims 1 to 4, which comprises metal salts of colophony or colophony derivatives.

6. A plasticizer-containing polyvinylbutyral as claimed in one or more of claims 1 to 4, which comprises metal salts of reaction products of resin acids with 0.1 to 12% by weight, based on the resin acids, of an aliphatic (C₁-C₇)-aldehyde, benzaldehyde, furfural or glyoxal, monomeric, oligomeric or polymeric formaldehyde.

7. A plasticizer-containing polyvinylbutyral as claimed in one or more of claims 1 to 4, which comprises metal salts of reaction products of resin acids or of resin acid metal salts with 0.1 to 3% by weight, based on the metal salts of the resin acids, of an ethylenically unsaturated (C₃-C₁₈) -carboxylic acid or -dicarboxylic acid or -dicarboxylic acid anhydride.

8. A plasticizer-containing polyvinylbutyral as claimed in one or more of claims 1 to 4, which comprises metal salts of reaction products of resin acids or of resin acid metal salts with 0.1 to 10% by weight, based on the metal salts of the resin acids, of a phenol-aldehyde condensation product of the novolak or resol type.

9. The use of a plasticizer-containing polyvinylbutyral as claimed in one or more -of claims 1⁻ to 8 in plasticized films.

10. A plasticized film having a thickness of from 0.2 to 2 mm consisting of a plasticizer-containing polyvinylbutyral as claimed in one or more of claims 1 to 8.

11. The use of a plasticizer-containing polyvinylbutyral film as claimed in claim 10 as an interleaving film in a siliceous laminated safety glass pane or glass laminate pane.

12. A process for the preparation of a plasticizer-containing polyvinylbutyral with a reduced adhesiveness to siliceous glass surfaces as claimed in one or more of claims 1 to 8, which comprises adding adhesion-reducing additives from the group consisting of salts of metals from groups Ia, IIa, IIb and IIIa of the periodic table of the elements with naturally occurring resin acids or resin acid derivatives, if appropriate together with customary stabilizers and auxiliaries, to the mixture of polyvinylbutyral and plasticizer before, during or after mixing of the polyvinylbutyral with the plasticizer, and homogeneously distributing and dissolving the components, if appropriate with simultaneous thermoplastic shaping of the plasticizer-containing and plasticized polyvinylbutyral to a film.

13. A process for the preparation of a plasticizer-containing polyvinylbutyral with a reduced adhesiveness to siliceous glass surfaces as claimed in one or more of claims 1 to 8, which comprises applying to a plasticizer-containing, plasticized PVB film, which comprises customary stabilizers and auxiliaries, if appropriate, adhesion-reducing additives from the group consisting of salts of metals from groups Ia, IIa, IIb and IIIa of the periodic table of the elements with naturally occurring resin acids or resin acid derivatives by immersing the film in a solution which contains an adequate amount of these metal salts dissolved in an organic solvent, and then drying the film.

14. A laminated glass of siliceous glass panes with an interleaving film of a plasticized plasticizer-containing PVB, wherein the interleaving film comprises a plasticized adhesion-reduced plasticizer-containing PVB as claimed in one or more of claims 1 to 8.

15. The use of a laminated glass as claimed in claim 14 in a vehicle pane, glass pane for ships, aircraft pane, architectural glass pane for the building sector or armored glass pane.

## Revendications

1. Poly(butyrals de vinyle) contenant du plastifiant, qui conviennent pour la préparation de feuilles intercalaires pour les vitres de verre composite en verre silicaté et qui contiennent des additifs qui réduisent l'adhérence et éventuellement d'autres stabilisants et adjuvants, caractérisés en ce qu'ils contiennent comme additifs réduisant l'adhérence des sels de métaux des groupes la, IIa, IIb, IIIa du Système Périodique des Eléments, avec des acides résiniques naturels ou des dérivés d'acides résiniques.

2. Poly(butyrals de vinyle) contenant du plastifiant selon la revendication 1, caractérisés en ce que la teneur en plastifiant est de 20 à 60 % en poids, de préférence de 30 à 45 % en poids par rapport au PVB.

3. Poly(butyrals de vinyle) contenant du plastifiant selon les revendications 1 ou 2, caractérisés en ce que la teneur en sels métalliques d'acides résiniques, respectivement de dérivés d'acides résiniques, est de 0,01 à 0,2 % en poids, de préférence de 0,015 à 0,1 % en poids, plus particulièrement de 0,02 à 0,06 % en poids par rapport au poly(butyral de vinyle) contenant du plastifiant.

4. Poly(butyrals de vinyle) contenant du plastifiant selon une ou plusieurs des revendications 1 à 3, caractérisés en ce qu'ils contiennent des sels métalliques du groupe du calcium, du magnésium ou du zinc d'acides résiniques ou de dérivés d'acide résinique.

5. Poly(butyrals de vinyle) contenant du plastifiant selon une ou plusieurs des revendications 1 à 4, caractérisés en ce qu'ils contiennent des sels métalliques de la colophane ou des dérivés de la colophane.

6. Poly(butyrals de vinyle) contenant du plastifiant selon une ou plusieurs des revendications 1 à 4, caractérisés en ce qu'ils contiennent des sels métalliques des produits de réaction des acides résiniques avec 0,1 à 12 % en poids par rapport aux acide résiniques, d'un aldéhyde en C₁-C₇ aliphatique, de benzaldéhyde, de furfural ou de glyoxal, de formaldéhyde monomère, oligomère ou polymère.

7. Poly(butyrals de vinyle) contenant du plastifiant selon une ou plusieurs des revendications 1 à 4, caractérisés en ce qu'ils contiennent des sels métalliques des produits de réaction des acides résiniques ou des sels métalliques d'acides résiniques avec 0,1 à 3 % en poids par rapport aux sels métalliques des acides résiniques, d'un acide carboxylique ou dicarboxylique à insaturation éthylénique ou d'un anhydride d'acide dicarboxylique en C₃-C₁₈.

8. Poly(butyrals de vinyle) contenant du plastifiant selon une ou plusieurs des revendications 1 à 4, caractérisés en ce qu'ils contiennent des sels métalliques des produits de réaction des acides résiniques ou des sels métalliques des acides résiniques, avec 0,1 à 10 % en poids par rapport aux sels métalliques des acides résiniques d'un produit de condensation de phénolformaldéhyde du type novolaque ou résol.

9. Utilisation des poly(butyrals de vinyle) contenant du plastifiant selon une ou plusieurs des revendications 1 à 8 sous forme de feuilles plastifiées.

10. Feuilles plastifiées de poly(butyral de vinyle) ayant une épaisseur de 0,2 à 2 mm contenant du plastifiant selon une ou plusieurs des revendications 1 à 8.

11. Utilisation des feuilles de poly(butyral de vinyle) contenant du plastifiant selon la revendication 10 en tant que feuilles intercalaires dans les vitres de sécurité de verre composite silicaté, respectivement dans les vitres de verre composite.

12. Procédé pour la préparation de poly(butyrals de vinyle) contenant du plastifiant, ayant un pouvoir d'adhérence aux surfaces de verre silicaté réduit, selon une ou plusieurs des revendications 1 à 8, caractérisé en ce que l'on ajoute aux mélanges de poly(butyrals de vinyle) et de plastifiants, des additifs réduisant l'adhérence pris dans le groupe des sels de métaux des groupes la, IIa, IIa, IIb, IIIa du Système Périodique des Eléments, avec des acides résiniques naturels ou des dérivés d'acides résiniques, éventuellement conjointement avec des stabilisants ou adjuvants usuels avant ou au cours du mélange du poly(butyral de vinyle) avec le plastifiant, et on les répartit de façon homogène et on les dissout, éventuellement en moulant en même temps à l'aide de procédés thermoplastiques les poly(butyrals de vinyle) plastifiés contenant du plastifiant pour obtenir des feuilles.

13. Procédé pour la préparation de poly(butyrals de vinyle) contenant du plastifiant, ayant un pouvoir d'adhérence aux surfaces de verre silicaté réduit selon une ou plusieurs des revendications 1 à 8, caractérisé en ce que l'on applique sur des feuilles de PVB plastifiées contenant du plastifiant, qui contiennent éventuellement des stabilisants et adjuvants usuels, des additifs réduisant l'adhérence pris dans le groupe des sels de métaux des groupes la, IIa, IIb, IIIa du Système Périodique des Eléments, avec des acides résiniques naturels ou des dérivés d'acides résiniques, en trempant les feuilles dans des solutions dans un solvant organique qui contiennent des quantités suffisantes de ces sels métalliques, et ensuite par séchage.

14. Verres composites en vitres de verre silicaté avec des feuilles intercalaires de PVB plastifié contenant du plastifiant, caractérisé en ce que les feuilles intercalaires sont constituées de PVB plastifié contenant du plastifiant réduisant l'adhérence, selon une ou plusieurs des revendications 1 à 8.

15. Utilisation des verres composites selon la revendication 14 dans les vitres de véhicules, les vitres de bateaux, les hublots d'avions, les vitres architecturales dans le secteur du bâtiment et les vitres de blindage.
